# EUROPEAN PATENT SPECIFICATION

(11) **EP 2 801 508 B1**
(45) Date of publication and mention of the grant of the patent: **27.04.2016**
(21) Application number: 14166191.8
(22) Date of filing: 28.04.2014
(51) Int. Cl.: B62D 1/187, F16D 3/205, B62D 1/20

(54) **Coupling in a tiltable steering column**
Kupplung in einer schwenkbare Lenksäule
Couplage dans une colonne de direction inclinable

(30) Priority: 07.05.2013 IT MI20130736
(43) Date of publication of application: 12.11.2014
(73) Proprietor: FINAN.CO. S.r.l, 20056 Trezzo Sull'Adda - Milano (IT)
(72) Inventor: Barbieri, Walter, 20056 TREZZO SULL'ADDA-MILANO (IT)
(74) Representative: Giuli, Maurizio Mario Galdino

(56) References cited:
- DE-A1-102011 001 765
- US-A- 4 193 707
- US-B1- 6 213 675
- US-B1- 6 663 493

## Description

The present invention relates to a coupling in a tiltable steering column.

In the automotive field, various types of steering columns are currently used, consisting of a plurality of elements, some of which obtained through complex formation and assembly operations.

Cardan joints are used in these columns to allow angular regulation movements of the steering wheel, having a certain amplitude (greater or lesser) in the various directions ergonomically selected, or in the disengagement direction from the position on the vehicle. This in fact allows the transmission of the rotational movement between two shafts with a certain incidence angle.

In a steering column equipped with tilt regulation of the tilt, so-called "tiltable", the transmission of the steering wheel-power steering system is exerted by a conventional cardan joint.

It is known that with the presence of a cardan joint, the maximum potential angle does not exceed 45°. A cardan joint also has a certain construction complexity.

It is also known that, due to the presence of vibrations in the kinematic chain, the use of a current cardan joint in a steering column compels the use of an additional damping element to be positioned in the section of shaft between the cardan joint and power steering system. This creates a greater encumbrance, a cost increase and assembly complications.

Furthermore, a normal cardan joint has problems relating to oxidation in aggressive environments.

DE 10 2011 001765 relates to a coupling for the transmission of the rotational movement according to the preamble of claim 1 which discloses two parts connected by a transversal pin.

Many attempts have been made in recent years to find a solution to the various problems described above, but no valid solution has as yet been found.

The general objective of the present invention is to solve the above-mentioned drawbacks of the known art, in an extremely simple, economic and particularly functional manner.

A further objective of the present invention is to provide a coupling in a tiltable steering column which has a particularly simplified construction that does not require additional mechanical processings for adapting the parts and complex assembly.

Yet another objective of the present invention is to provide a coupling in a tiltable steering column which is capable of withstanding and absorbing vibrations.

In view of the above objectives, according to the present invention, a coupling in a tiltable steering column has been conceived, having the characteristics specified in the enclosed claims.

The structural and functional characteristics of the present invention and its advantages with respect to the known art will appear even more evident from the following description, referring to the enclosed drawings, which, inter alia, show a scheme of an embodiment of a coupling in a tiltable steering column produced according the invention. In the drawings:

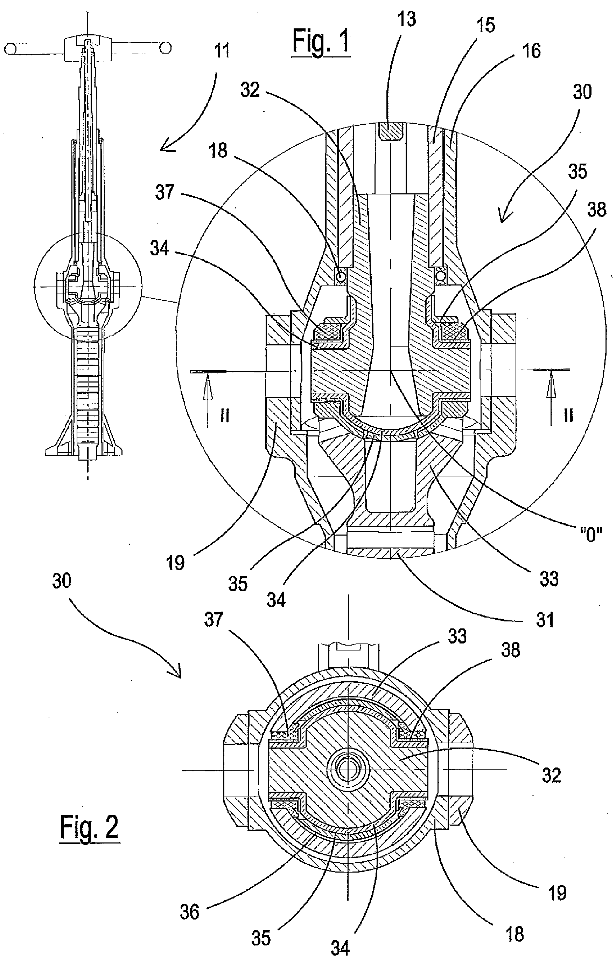

- figure 1 shows a raised side view of a coupling produced according to the invention in a tiltable steering column as illustrated in the view of the adjacent column.
- figure 2 shows a section according to the line II-II of figure 1;

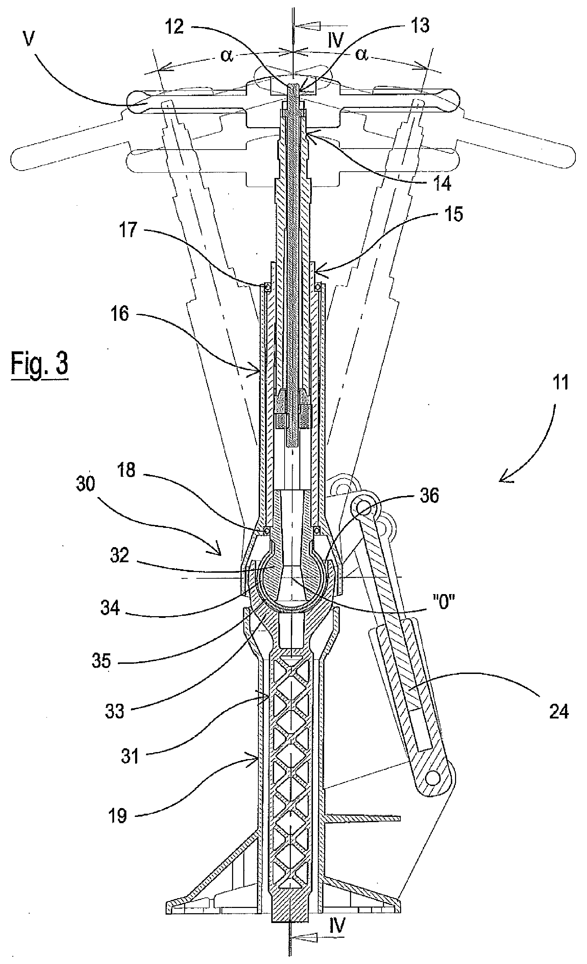

- figure 3 is a sectional side view of a steering column containing the coupling according to the invention rotated by 90° with respect to figure 1;

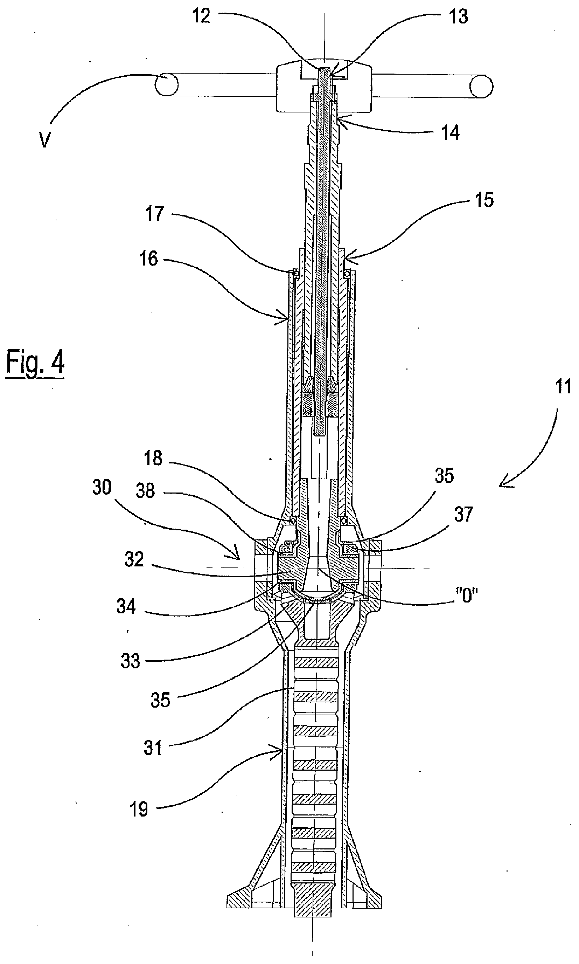

- figure 4 is a view of the column containing the coupling as illustrated in figure 1;

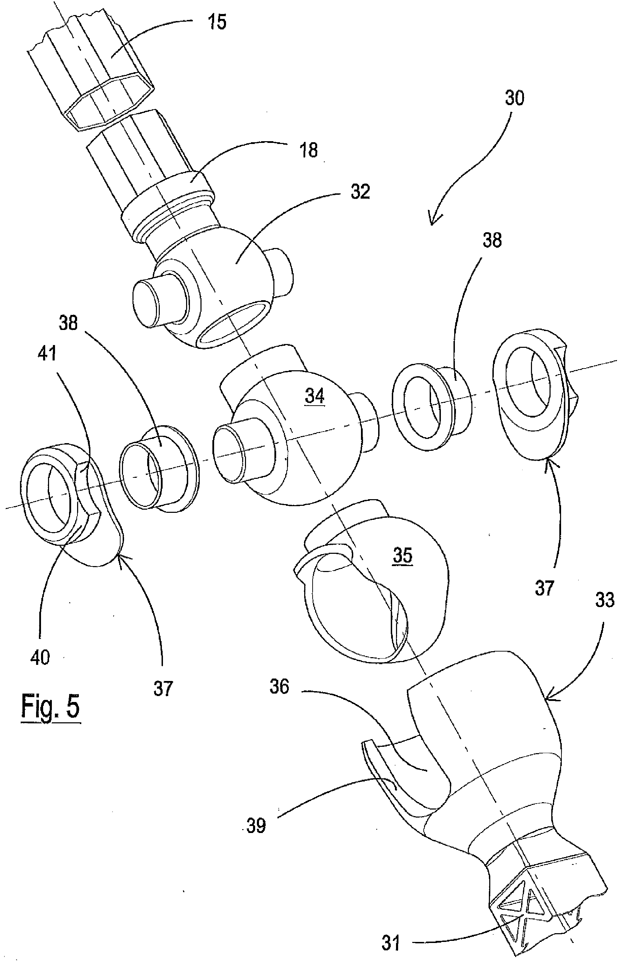

- figure 5 is an exploded perspective view of the details of the coupling of the previous figures.

With reference to the figures, these illustrate a tiltable steering column 11 in which a coupling produced according to the present invention is positioned, indicated as a whole with 30.

The steering column 11 is of the telescopic type (non-limiting, in the example), in an upper free end 12 of a rod element 13, it is made integral with a handle (not shown in the drawings), positioned centrally in a steering wheel V of a vehicle, not shown.

The steering wheel V is fixed to a tubular element 14 which in turn is positioned coaxially externally to contain the internal rod element 13.

The tubular element 14, in turn, slides inside an outer tubular element 15, forming a telescopic group, according to a polygonal coupling which is shown in the figures, for illustrative and non-limiting purposes, as prismatic with a polygonal or rather octagonal section. In this way, the coupling is suitable for allowing the transmission of the rotational movement from the tubular element 14 to the outer tubular element 15, in any case allowing an axial sliding of the tubular element 14.

This outer tubular element 15 is supported at its ends by a containment element 16, which surrounds it and forms a first movable part of the chassis, by means of a pair of bearings 17 and 18. In this way, the outer tubular element 15 is free to rotate but is axially blocked with respect each axial movement.

The containment element 16, or first movable part of the chassis, is hinged in "O" with respect to a second containment element 19 or second underlying fixed part of the chassis, whose tilt can be regulated thanks to the presence of a gas spring group 24, which can be actuated in the desired position by means of a specific command in order to maintain the position selected.

The coupling according to the present invention is positioned between these two parts of the chassis 16 and 19.

As better illustrated in the figures, this is a coupling, indicated as a whole with 30, for transmitting the rotational movement between two shafts, indicated in this case with 15 and 31 in the figures, having a certain variable incidence angle. In this case, it is used for transmitting the rotational movement from the steering wheel connected to the shaft rod 13 (driven shaft) to a power steering system (not shown), in a steering column equipped with a tiltable movement.

The transmission coupling 30 comprises a first upper half-coupling 32 coupled with the end of the tubular element 15 which acts as a shaft and a second lower half-coupling 33, shown in the figure as being integral with the shaft 31, which form a complete spherical bulb-shaped coupling. The first upper half-coupling 32 is sheathed (completely isolated) with respect to the other components, by means of a sheath element 34 which envelops it in one of its coupling portions to the second lower half-coupling 33.

The sheath element 34 is a rubber damping or similar element (suitably dimensioned in thickness, in the shore hardness, in the exchange areas of the tangential forces generated by the rotation torque). The sheath element 34 is in turn covered by an antifriction jacket 35 (for example in acetal material or POM) whose exterior is coupled in a sliding spherical coupling with a cavity 36 of the second lower half-coupling 33 (lower half-coupling 33 onto which the rotational movement coming from the first upper half-coupling 32 is transferred).

Two cylindrical bushes 38 are fitted, with suitable interference, on the damping sheath element 34, on which two skids 37 are articulated.

Shaped opposite sides 40 having milled portions 41, protrude from each skid 37 and are coupled laterally in appropriate seats 39 positioned laterally in the spherical cavity 36 of the second lower half-coupling 33.

The torque transfer from the first upper half-coupling 32 to the second lower half-coupling 33, takes place through contact between milled portions 41 of the shaped sides 40 of the skids 37 and the flanks of the seats 39 of the second lower half-coupling 33.

The particular feature of the coupling described ensures that in the presence of an incidence angle between the driving axis 15 and driven axis 31, the rotation of these axes is kept stable around the relative intersection point, thanks to the spherical bulb-shaped coupling between the first upper half-coupling 32 and the second lower half-coupling 33 with the interpositioning of the sheath element 34 and antifriction jacket 35.

The equations of motion show a non-homokinetic behaviour of the coupling with respect to both the velocity and driving and driven torques, in the same way as a normal cardan joint. However, what is taking place in fact is the elimination of the cardan joint cross, with a considerable simplification of the parts and costs.

Each contact or transfer of forces or torques from the first upper half-coupling 32 (connected to the steering column) to the second lower half-coupling 33 (connected on the power steering system, considered as being isolated with common silent blocks with respect to the column and vehicle/cabin on which this is fixed) is mediated by the damping sheath element 34.

There is therefore a functional integration, inside the same spherical bulb-shaped coupling, of a suitable damping element capable of damping the vibroacoustic signal still coming from the power steering system. This vibroacoustic signal, through rigid contact between the power steering system and the second lower half-coupling 33, is conveyed by the lower half-coupling 33 to the damping sheath element 34 which transmits it to the column, damping it. There is therefore an important attenuation of the noise which would otherwise be reverberated in the cabin.

No intermediate supporting element can be added at the second lower half-coupling 33, without the danger of short-circuiting the isolation of the power steering system with respect to the steering column. The present coupling (in terms of tolerable side reaction torques) allows the absence of these intermediate supporting elements, like a cardan joint.

The spherical bulb-shaped coupling described above can, if necessary, be without the damping sheath element 34, by simply increasing the thickness of the antifriction jacket 35, thus creating a certain versatility towards less demanding applications in which sound-reduction performances are not required (e.g. flatbed cars or vehicles, etc.).

In order to improve the mechanical performance of the spherical bulb-shaped coupling, the skids 37 can be replaced by rolling elements, capable of rolling along the sides of the entrainment seats situated in the spherical cavity of the second lower half-coupling 33.

The advantages of a coupling according to the present invention can be briefly summarized as follows:
- reduction in costs with the same quality, with the introduction of oxidation resistance;
- extreme compactness of the coupling englobing the damping element, eliminating separate additional dampers;
- structural and functional versatility of the coupling.

The objective mentioned in the preamble of the description has therefore been achieved.

The forms of the structure for producing a coupling of the invention, as also the materials and assembly modes, can obviously differ from those shown for purely illustrative and non-limiting purposes in the drawings.

The protection scope of the present invention is therefore delimited by the enclosed claims.

## Claims

1. A coupling for the transmission of the rotational movement in a tiltable steering column, wherein said column comprises a first movable part of the chassis (16) and a second underlying fixed part (19) of the chassis, a rod element (13), integral with a handle, positioned in the centre of a steering wheel of a vehicle being situated in said first part of the movable chassis (16), and a shaft (31) connected to a hydraulic power steering system, being positioned inside said second underlying fixed part (19) of the chassis, said coupling (30) effecting the transmission of the rotational movement between two rotating shafts defined by a tubular element (15) and a lower shaft (31) and the regulated tilted positioning between said first movable part (16) of the chassis and said second underlying fixed part (19) of the chassis, wherein said coupling (30) comprises a first upper half-coupling (32) coupled with the end of said outer tubular element (15) and a second lower half-coupling (33) integral with the lower shaft (31), which form a complete spherical bulb-shaped coupling in which said first upper half-coupling (32) is sheathed by means of a sheath element (34) which envelops it in one of its coupling portions to the second lower half-coupling (33), said sheath element (34) being a rubber damping element or similar element, **characterized in that** two cylindrical bushes (38) are fitted with interference on said sheath element (34), on which two skids (37) inserted in said second lower half-coupling (33) are articulated.

2. The coupling according to claim 1, **characterized in that** said sheath element (34) is in turn covered by an antifriction jacket (35) whose exterior is coupled in a sliding spherical coupling with a cavity (36) of the second lower half-coupling (33).

3. The coupling according to claim 1, **characterized in that** said skids (37) have shaped opposite sides (40) having milled portions (41), which protrude from each skid (37) and which are coupled laterally in complementary seats (39) situated in said cavity (36) of the second lower half-coupling (33) which is spherically-shaped.

## Patentansprüche

1. Kupplung für die Übertragung der Drehbewegung in einer neigbaren Lenksäule, wobei die Säule ein erstes bewegliches Teil des Gehäuses (16) und ein zweites darunterliegendes festes Teil (19) des Gehäuses, ein Stangenelement (13), einstückig mit einem Griff, das in der Mitte eines Lenkrades eines Fahrzeugs positioniert ist und in dem ersten Teil des beweglichen Gehäuses (16) gelegen ist, und einen Schaft (31) umfasst, der mit einem Servolenksystem verbunden und innerhalb des zweiten darunterliegenden festen Teils (19) des Gehäuses angeordnet ist, wobei die Kupplung (30) die Übertragung der Drehbewegung zwischen zwei rotierenden Schäften, die durch ein rohrförmiges Element (15) und einen unteren Schaft (31) definiert sind, und die geregelte geneigte Positionierung zwischen dem ersten beweglichen Teil (16) des Gehäuses und dem zweiten darunterliegenden festen Teil (19) des Gehäuses bewirkt, wobei die Kupplung (30) eine erste obere Halbkupplung (32), die mit dem Ende des äußeren rohrförmigen Elements (15) gekuppelt ist, und eine zweite untere Halbkupplung (33), die einstückig mit dem unteren Schaft (31) ist, umfasst, welche eine vollständige kugel-birnenförmige Kupplung bilden, in welcher die erste obere Halbkupplung (32) mittels eines Abdeckungselements (34) abgedeckt ist, welches sie in einem ihrer Kupplungsabschnitte mit der unteren Halbkupplung (33) einhüllt, wobei das Abdeckungselement (34) ein Kautschukdämpfungselement oder ähnliches Element ist, **dadurch gekennzeichnet, dass** zwei zylindrische Buchsen (38) auf das Abdeckungselement (34) gepresst sind, an welchem zwei Gleitstücke (37), die in der zweiten unteren Halbkupplung (33) eingesetzt sind, angelenkt sind.

2. Kupplung nach Anspruch 1, **dadurch gekennzeichnet, dass** das Abdeckungselement (34) wiederum durch einen reibungsarmen Mantel (35) bedeckt ist, dessen Außenseite in einer gleitenden kugelförmigen Kupplung mit einem Hohlraum (36) der zweiten unteren Halbkupplung (33) gekuppelt ist.

3. Kupplung nach Anspruch 1, **dadurch gekennzeichnet, dass** die Gleitstücke (37) geformte entgegengesetzte Seiten (40) mit gefrästen Abschnitten (41) aufweisen, die von jedem Gleitstück (37) vorstehen und die seitlich in komplementären Sitzen (39) gekuppelt sind, die in dem Hohlraum (36) der zweiten unteren Halbkupplung (33), der kugelförmig ist, gelegen sind.

## Revendications

1. Accouplement pour la transmission du mouvement de rotation dans une colonne de direction inclinable, ladite colonne comprenant une première partie mobile du châssis (16) et une seconde partie fixe sous-jacente (19) du châssis, un élément de tige (13) d'un seul tenant avec une manette positionnée dans le centre d'un volant de direction d'un véhicule étant situé dans ladite première partie du châssis mobile (16), et un arbre (31) raccordé à un système de direction assistée hydraulique étant positionné à l'intérieur de ladite seconde partie fixe sous-jacente (19) du châssis, ledit accouplement (30) effectuant la transmission du mouvement de rotation entre deux arbres rotatifs définis par un élément tubulaire (15) et un arbre inférieur (31) et le positionnement incliné régulé entre ladite première partie mobile (16) du châssis et ladite seconde partie fixe sous-jacente (19) du châssis, ledit accouplement (30) comprenant un premier demi-accouplement supérieur (32) couplé à l'extrémité dudit élément tubulaire extérieur (15) et un second demi-accouplement inférieur (33) d'un seul tenant avec l'arbre inférieur (31), qui forment un accouplement piriforme sphérique complet dans lequel ledit premier demi-accouplement supérieur (32) est gainé au moyen d'un élément de gaine (34) qui l'enveloppe dans l'une de ses parties de couplage au second demi-accouplement inférieur (33), ledit élément de gaine (34) étant un élément d'amortissement en caoutchouc ou un élément similaire, **caractérisé en ce que** deux bagues cylindriques (38) sont ajustées avec serrage sur ledit élément de gaine (34), sur lequel deux sabots (37) insérés dans ledit second demi-accouplement inférieur (33) sont articulés.

2. Accouplement selon la revendication 1, **caractérisé en ce que** ledit élément de gaine (34) est à son tour couvert par un manchon antifriction (35) dont l'extérieur est couplé dans un accouplement sphérique glissant avec une cavité (36) du second demi-accouplement inférieur (33).

3. Accouplement selon la revendication 1, **caractérisé en ce que** lesdits sabots (37) présentent des côtés opposés façonnés (40) comportant des parties fraisées (41), qui font saillie de chaque sabot (37) et qui sont couplés latéralement dans des sièges complémentaires (39) situés dans ladite cavité (36) du second demi-accouplement inférieur (33) qui est de forme sphérique.
